# EUROPEAN PATENT APPLICATION

(11) **EP 4 440 178 A1**
(43) Date of publication of application: **02.10.2024**
(21) Application number: 21965659.2
(22) Date of filing: 26.11.2021
(51) Int. Cl.: H04W 16/28, H04W 72/04

(54) **TERMINAL, WIRELESS COMMUNICATION METHOD AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); SUN, Weiqi, Beijing 100190 (CN); CHEN, Lan, Beijing 100190 (CN)
(74) Representative: Hoffmann Eitle
(86) International application number: PCT/JP2021/043414
(87) International publication number: WO 2023/095288

(57) **Abstract**

A terminal according to one aspect of the present disclosure includes: a receiving section that receives information related to an SRS resource set including one or more (Sounding Reference Signal (SRS)) resources; a control section that judges a correspondence between the SRS resource set and an active panel identifier or a panel identifier reported by terminal capability signaling; and a transmitting section that transmits an SRS, based on the correspondence.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), it is studied that one or a plurality of transmission/reception points (TRPs) (multi-TRP (Multi TRP (MTRP))) perform DL transmission to a user terminal (User Equipment (UE)). It is also studied that the UE performs UL transmission to the one or plurality of TRPs by using one or a plurality of panels.

For future radio systems (for example, NR in Rel. 17 or later versions), Physical Uplink Shared Channel (PUSCH) repetition transmission by MTRP is studied.

However, the study has not advanced yet about how to perform control/configuration of a single TRP (STRP)/MTRP PUSCH for a UE supporting a plurality of panels. Unless these are defined appropriately, communication throughput, communication quality, and the like may deteriorate.

Thus, an object of the present disclosure is to provide a terminal, a radio communication method, and a base station that enable appropriate performance of UL transmission when a plurality of panels are supported. Solution to Problem

A terminal according to one aspect of the present disclosure includes: a receiving section that receives information related to an SRS resource set including one or more (Sounding Reference Signal (SRS)) resources; a control section that judges a correspondence between the SRS resource set and an active panel identifier or a panel identifier reported by terminal capability signaling; and a transmitting section that transmits an SRS, based on the correspondence.

### Advantageous Effects of Invention

According to one aspect of the present disclosure, it is possible to appropriately perform UL transmission when a plurality of panels are supported.

### Brief Description of Drawings

[FIG. 1] FIG. 1 is a diagram to show an example of indication of switching between a single-TRP mode and a multi-TRP mode using DCI.
[FIG. 2] FIG. 2A and FIG. 2B are each a diagram to show an example of association between an SRS resource set and a P-ID in the present embodiment.
[FIG. 3] FIG. 3A to FIG. 3C are each a diagram to show another example of the association between an SRS resource set and a P-ID in the present embodiment.
[FIG. 4] FIG. 4 is a diagram to show another example of the association between an SRS resource set and a P-ID in the present embodiment.
[FIG. 5] FIG. 5 is a diagram to show examples of a transmission mode corresponding to the number of activated SRS resource sets in the present embodiment.
[FIG. 6] FIG. 6A and FIG. 6B are each a diagram to show an example of association between an SRS resource set and a P-ID using DCI in the present embodiment.
[FIG. 7] FIG. 7A and FIG. 7B are each a diagram to show another example of the association between an SRS resource set and a P-ID using DCI in the present embodiment.
[FIG. 8] FIG. 8A and FIG. 8B are each a diagram to show another example of the association between an SRS resource set and a P-ID using DCI in the present embodiment.
[FIG. 9] FIG. 9A and FIG. 9B are each a diagram to show an example of association between a list of SRS resource sets and a P-ID in the present embodiment.
[FIG. 10] FIG. 10A and FIG. 10B are each a diagram to show an example of association between an SRS resource and a P-ID in the present embodiment.
[FIG. 11] FIG. 11 is a diagram to show examples of indication of an SRS resource set / P-ID using an SRS request field of DCI in the present embodiment.
[FIG. 12] FIG. 12 is a diagram to show an example of a schematic structure of a radio communication system according to one embodiment.
[FIG. 13] FIG. 13 is a diagram to show an example of a structure of a base station according to one embodiment.
[FIG. 14] FIG. 14 is a diagram to show an example of a structure of a user terminal according to one embodiment.
[FIG. 15] FIG. 15 is a diagram to show an example of a hardware structure of the base station and the user terminal according to one embodiment.
[FIG. 16] FIG. 16 is a diagram to show an example of a vehicle according to one embodiment.

### Description of Embodiments

### (Spatial Relation for SRS, PUSCH)

In Rel- 15/16 NR, a UE may receive information to be used for transmission of a reference signal for measurement (for example, a sounding reference signal (SRS)) (SRS configuration information, for example, a parameter in an RRC control element "SRS-Config").

Specifically, the UE may receive at least one of information related to one or a plurality of SRS resource sets (SRS resource set information, for example, an RRC control element "SRS-ResourceSet") and information related to one or a plurality of SRS resources (SRS resource information, for example, an RRC control element "SRS-Resource").

One SRS resource set may be related to a certain number of (for example, one or more or a plurality of) SRS resources (may group the certain number of SRS resources). Each SRS resource may be specified by an SRS resource indicator (SRI) or an SRS resource ID (Identifier).

The SRS resource set information may include information of an SRS resource set ID (SRS-ResourceSetId), a list of SRS resource IDs (SRS-ResourceId) used in the resource set, an SRS resource type (for example, any of a periodic SRS, a semi-persistent SRS, and an aperiodic CSI (Aperiodic SRS)), and SRS usage.

Here, the SRS resource type may indicate any one of a periodic SRS (P-SRS), a semi-persistent SRS (SP-SRS), and an aperiodic CSI (Aperiodic SRS (A-SRS)). Note that the UE may transmit a P-SRS and an SP-SRS periodically (or periodically after activation), and may transmit an A-SRS, based on an SRS request of DCI.

The usage (RRC parameter "usage," L1 (Layer-1) parameter "SRS-SetUse") may be, for example, beam management (beamManagement), codebook (CB), non-codebook (noncodebook (NCB)), antenna switching, and the like. An SRS with codebook (CB) or non-codebook (NCB) usage may be used for determination of a precoder for codebook based or non-codebook based PUSCH transmission based on an SRI.

For example, in a case of codebook based transmission, the UE may determine a precoder for PUSCH transmission, based on the SRI, a transmitted rank indicator (TRI) and a transmitted precoding matrix indicator (TPMI). In a case of non-codebook based transmission, the UE may determine a precoder for PUSCH transmission, based on the SRI.

The SRS resource information may include an SRS resource ID (SRS-ResourceId), the number of SRS ports, SRS port numbers, transmission Comb, SRS resource mapping (for example, time and/or frequency resource location, a resource offset, resource periodicity, the number of repetitions, the number of SRS symbols, an SRS bandwidth, and the like), hopping related information, an SRS resource type, a sequence ID, spatial relation information of the SRS, and the like.

The spatial relation information of the SRS (for example, an RRC information element "spatialRelationInfo") may indicate spatial relation information between a certain reference signal and the SRS. The certain reference signal may be at least one of a synchronization signal / broadcast channel (Synchronization Signal / Physical Broadcast Channel (SS/PBCH)) block, a channel state information reference signal (CSI-RS), and an SRS (for example, another SRS). The SS/PBCH block may be referred to as a synchronization signal block (SSB).

The spatial relation information of the SRS may include at least one of an SSB index, a CSI-RS resource ID, and an SRS resource ID as an index of the certain reference signal.

Note that, in the present disclosure, an SSB index, an SSB resource ID, and an SSB Resource Indicator (SSBRI) may be interchangeably interpreted. A CSI-RS index, a CSI-RS resource ID, and a CSI-RS Resource Indicator (CRI) may be interchangeably interpreted. An SRS index, an SRS resource ID, and an SRI may be interchangeably interpreted.

The spatial relation information of the SRS may include a serving cell index, a BWP index (BWP ID), and the like corresponding to the certain reference signal.

When the UE is configured with spatial relation information related to an SSB or a CSI-RS and the SRS for a certain SRS resource, the UE may transmit the SRS resource by using the same spatial domain filter (spatial domain transmission filter) as a spatial domain filter (spatial domain reception filter) for reception of the SSB or the CSI-RS. In this case, the UE may assume that a UE receive beam of the SSB or the CSI-RS and a UE transmit beam of the SRS are the same.

When the UE is configured for a certain SRS (target SRS) resource with spatial relation information related to another SRS (reference SRS) and the SRS (target SRS), the UE may transmit the target SRS resource by using the same spatial domain filter (spatial domain transmission filter) as a spatial domain filter (spatial domain transmission filter) for transmission of the reference SRS. In other words, in this case, the UE may assume that a UE transmit beam of the reference SRS and a UE transmit beam of the target SRS are the same.

The UE may determine, based on a value of a certain field (for example, an SRS resource indicator (SRI) field) in DCI (for example, DCI format 0_1), a spatial relation of a PUSCH scheduled by the DCI. Specifically, the UE may use the spatial relation information of the SRS resource (for example, an RRC information element "spatialRelationInfo") determined based on the value of the certain field (for example, an SRI) for PUSCH transmission.

In Rel-16 NR, when codebook based PUSCH transmission is used, the UE may be configured with one SRS resource set with usage = CB, configured with two SRS resources per SRS resource set above by RRC, and indicated with one of the two SRS resources by DCI (for example, a 1-bit SRI field). Note that the SRS resources of the same SRS resource set may have the same number of ports (number of SRS ports) except for a case where full power mode 2 is configured (for example, a higher layer parameter ul-FullPowerTransmission-rl6 is configured at fullpowerMode2).

In Rel-16 NR, when non-codebook based PUSCH transmission is used, the UE may be configured with one SRS resource set with usage = NCB, configured with four SRS resources per SRS resource set above by RRC, and indicated with one or a combination of the four SRS resources by DCI (for example, a 2-bit SRI field). Note that the SRS resources of the SRS resource set with usage = NCB may each have one port.

### (Multi-TRP)

For NR, it is studied that one or a plurality of transmission/reception points (TRPs) (multi-TRP (M-TRP)) perform DL transmission to a UE by using one or a plurality of panels (multi-panel). It is also studied that the UE performs UL transmission to the one or plurality of TRPs by using one or a plurality of panels.

For future radio systems (for example, NR in Rel. 17 or later versions), it is studied to indicate a plurality of (for example, two) SRS resource indicators (SRIs) / transmitted precoding matrix indicator (TPMIs) by using single DCI for performing PUSCH repetition transmission by a plurality of TRPs (MTRP PUSCH repetition).

For example, in a case of codebook based transmission, the UE may determine a precoder for PUSCH transmission, based on an SRI, a transmitted rank indicator (TRI), and a TPMI. In a case of non-codebook based transmission, the UE may determine a precoder for PUSCH transmission, based on the SRI. Note that the SRI may be indicated to the UE by DCI or may be given by a higher layer parameter.

As described above, both codebook based PUSCH transmission and noncodebook based PUSCH transmission may be supported for a single-DCI based M-TRP PUSCH repetition scheme.

In such a case, the maximum number of SRS resource sets may be enhanced to X (for example, X = 2). It may also be supported that a plurality of (for example, two) SRI fields corresponding to a plurality of (for example, two) SRS resource sets are included in a certain DCI format (for example, DCI format 0_1/0_2) used for scheduling of a PUSCH. Each of the SRI fields may indicate an SRI per TRP.

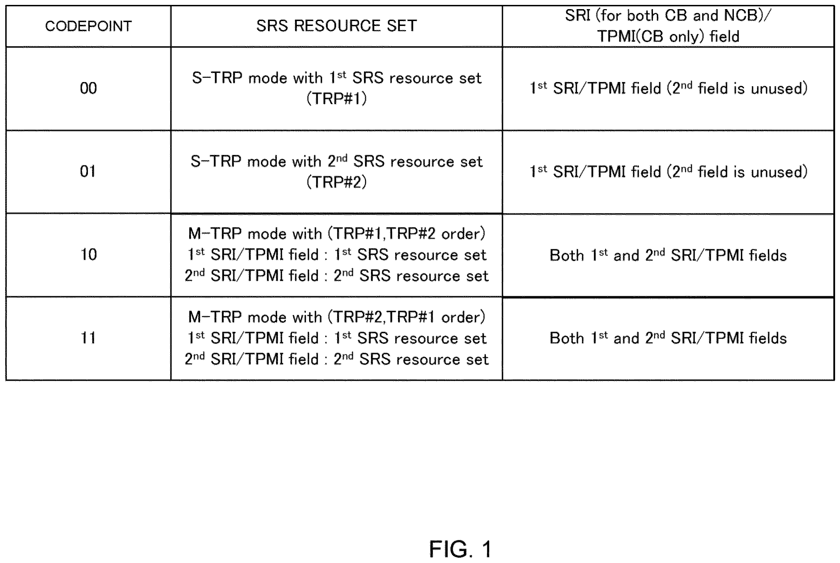

Dynamic switching (or switch) between multi-TRP operation and single-TRP operation may be supported. In this case, in downlink control information, a field (for example, a new field) for indicating dynamic switch may be supported (refer to FIG. 1). FIG. 1 shows a case of indicating switching between a single-TRP mode and a multi-TRP mode using a 2-bit field. It is apparent that the number of bits and indication contents corresponding to each codepoint are not limited thereto.

One or more SRS resource sets (for example, a first SRS resource set and a second SRS resource set) used for a multi-TRP PUSCH scheduled by a certain DCI format may be defined by an entry of a higher layer parameter. The higher layer parameter may be a higher layer parameter related to an SRS resource set (for example, srs-ResourceSetToAddModList/srs-ResourceSetToAddModListDCI-0-2 included in SRS-config) .

The presence of the field (for example, the new field) for dynamic switching included in the DCI may be determined separately for each of a plurality of DCI formats (for example, DCI format 0_1 and DCI format 0_2). For example, presence/absence of the new field in each of the DCI formats may be determined depending on whether a plurality of (for example, two) SRS resource sets are configured for the DCI format.

The same number of SRS resources may be supported for each of the plurality of (for example, two) SRS resource sets. For example, the numbers of SRS ports indicated by two SRIs for codebook based multi-TRP PUSCH repetition may be the same.

In Rel-18 NR and later versions, it is assumed that the UE reports UE capability information related to a UE panel(s) (or an SRS port(s)). The UE capability information related to a UE panel(s) may be included in UE capability value sets. Each UE capability value set may include the maximum number of SRS ports supported.

For example, when the UE reports a CSI-RS/SSB resource index and a list of UE capability value sets, it is also considered that the correspondence between the reported CSI-RS/SSB resource index and one of the UE capability value sets in the reported list is determined by the UE to notify an NW of the correspondence (for example, report a P-ID) by a beam report instance.

A beam report of Rel. 15/16 may be reused to report the index of a corresponding UE capability value set together with a pair of an SSBRI/CRI and an L1-RSRP/SINR in UCI for beam reporting.

In Rel-18 NR or later versions, it is necessary to configure SRS resources / SRS resource sets for respective different UE panels and make dynamic indication when necessary, to support simultaneous UL transmission using a plurality of panels and fast panel switch (for example, fast UL panel switch) for a multi-panel UE (for example, an MPUE) .

It is assumed that, when the panel ID (also referred to as a P-ID below) of an active UE panel is updated/changed, a corresponding SRS configuration (for example, SRS configuration) is also updated/changed.

For example, assume a case where the UE reports a list of UE capability value sets (or performs terminal capability signaling), one of the UE capability value sets in the reported list is determined by the UE, and the NW is notified of the UE capability value set by a beam report instance (which means that a P-ID is reported). In this case, it is also considered that update of the SRS configuration corresponding to the UE capability value set (for example, the P-ID) determined/reported by the UE is needed since different UE panels have different SRS configurations.

However, study about how to control configuration/update of an SRS resource /SRS resource set in UL transmission using a plurality of panels has not advanced yet. Unless these are defined appropriately, communication throughput, communication quality, and the like may deteriorate.

Thus, the inventors of the present invention studied a method for appropriately performing at least one of configuration of an SRS resource / SRS resource set and indication of an SRI in UL transmission (for example, a PUSCH/SRS) using one or more panels, and came up with the present embodiments.

Embodiments according to the present disclosure will be described in detail with reference to the drawings as follows. Note that the aspects (for example, the cases) to be described below may each be employed individually, or at least two of the aspects may be applied in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, a physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, a panel may mean an active panel. Each panel may be indicated by an explicit new ID, an implicit existing ID (for example, the ID of an RS / RS group ID / RS configuration ID / report ID) and the index of a UE capability value set. In the present disclosure, a "P-ID" may indicate at least one of an explicit new ID, an implicit exiting ID, and the index of a UE capability value set related to an active UE panel. In the present disclosure, the "P-ID" may mean all the UE panels reported by UE capability signaling or may mean only an active panel. Note that an activated panel may be interpreted as a triggered panel.

A dynamic switch in the present disclosure may mean a switch using at least one of higher layer signaling and physical layer signaling. Switch in the present disclosure may be interchangeably interpreted as switching, change, changing, application, indication, configuration, and the like, and vice versa.

### (Radio Communication Method)

### <First Embodiment>

In a first embodiment, an example of a method of configuring an SRS resource set / SRS resource will be described.

For a UE, a list of SRS resource sets may be configured/notified. The list of SRS resource sets may be configured for at least codebook based PUSCH / non-codebook based PUSCH. The list of SRS resource sets may be configured by RRC (for example, a certain higher layer parameter).

The list of SRS resource sets may be configured to include X SRS resource sets at maximum, for example. Each of the SRS resource sets may be configured to include Y SRS resources at maximum.

An association between an SRS resource set (or an SRS resource) and a panel ID (for example, one of P-IDs / UE capability value set) may be configured/notified/updated/defined/reported. For example, the association between an SRS resource set and a P-ID may be configured/notified/updated by RRC / DL MAC CE. Alternatively, the association between an SRS resource set and a P-ID may be reported to be a network by the UE by using a UL MAC CE or the like. The P-ID may be reported to an NW by the UE by UE capability signaling (for example, a UE capability value set).

At least one of option 1-1 to option 1-3 below may be applied to the association between an SRS resource set and a P-ID.

### {Option 1-1}

An SRS resource set and a P-ID may be associated by one-to-one mapping.

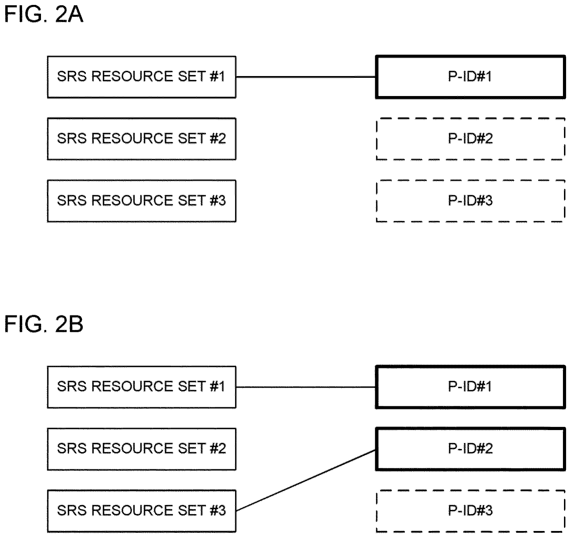

FIG. 2A and FIG. 2B each show an example of a case where option 1-1 is applied. FIG. 2A shows a case where P-ID #1 is activated and SRS resource set #1 and P-ID #1 are associated with each other. FIG. 2B shows a case where P-ID #1 and P-ID #2 are activated, and SRS resource set #1 and P-ID #1 are associated with each other while SRS resource set #3 and P-ID #2 are associated with each other.

### {Option 1-2}

An SRS resource set and a P-ID may be associated by multiple-to-one mapping (for example, multi-to-one mapping). For example, a plurality of SRS resource sets may be associated with one P-ID. In this case, a base station may update/change an SRS configuration for a UE panel. Note that option 1-2 may include a case where a plurality of P-IDs are activated and a case where a plurality of SRS resource sets are associated with a certain P-ID while one SRS resource set is associated with another P-ID.

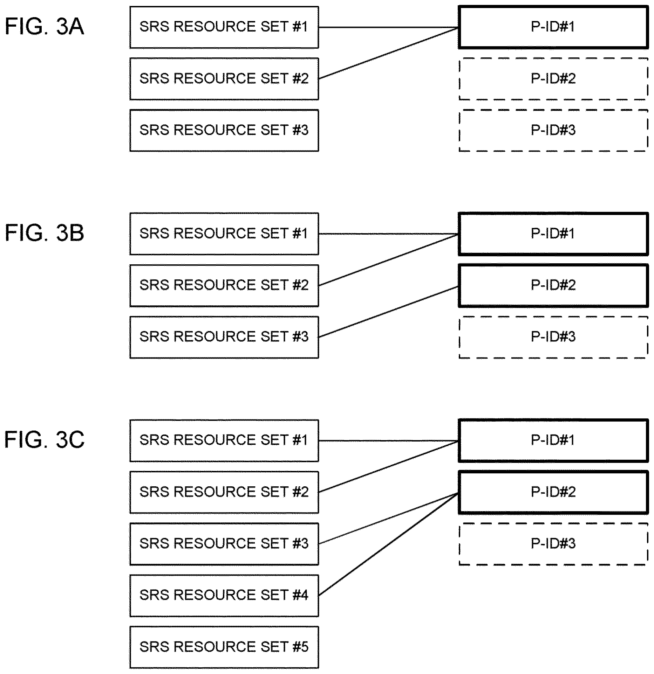

FIG. 3A to FIG. 3C each show an example of a case where option 1-2 is applied. FIG. 3A shows a case where P-ID #1 is activated and SRS resource sets #1 and #2 and P-ID #1 are associated with each other. FIG. 3B shows a case where P-ID #1 and P-ID #2 are activated, and SRS resource sets #1 and #2 and P-ID #1 are associated with each other while SRS resource set #3 and P-ID #2 are associated with each other. FIG. 3C shows a case where P-ID #1 and P-ID #2 are activated, and SRS resource sets #1 and #2 are associated with P-ID #1 while SRS resource sets #3 and #4 are associated with P-ID #2.

### {Option 1-3}

An SRS resource set and a P-ID may be associated with each other by one-to-multiple mapping (for example, one-to-multi mapping). For example, a plurality of P-IDs may be associated with one SRS resource set.

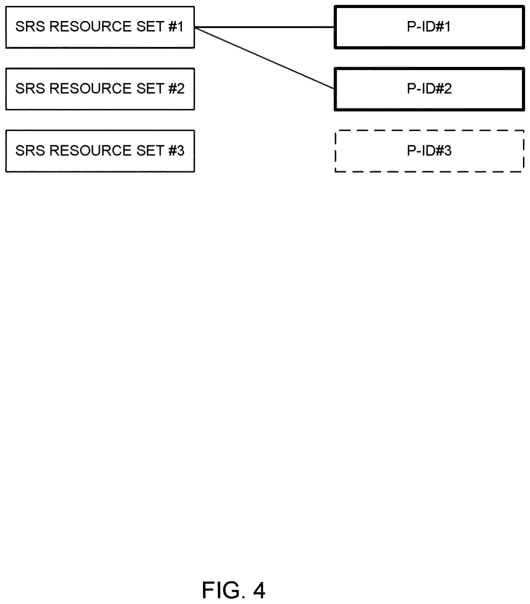

FIG. 4 shows an example of a case where option 1-3 is applied. FIG. 4 shows a case where P-ID #1 and P-ID #2 are activated and SRS resource set #1 is associated with P-ID #1 and P-ID #2.

UE capability information (for example, reported by a UL MAC CE) indicating whether the UE supports any one of option 1-1 to option 1-3 may be introduced. Alternatively, the base station may indicate which one of option 1-1 to option 1-3 is to apply, to the UE by using RRC / MAC CE or the like.

The number (for example, the maximum number (X)) of SRS resource sets may be the same as the number of P-IDs (for example, UE capability value sets). Alternatively, the number (for example, the maximum number (X)) of SRS resource sets may be configured/defined separately (for example, differently) from the number of P-IDs (for example, UE capability value sets). Based on UE ability reporting whether the UE supports a list of X SRS resource sets, whether the number of SRS resource sets and the number of P-IDs are the same may be determined. For example, when the UE cannot support the list of X SRS resource sets, the number of SRS resource sets may be configured/defined separately (for example, differently) from the number of P-IDs.

The number of SRS resources in each SRS resource set may be configured/defined separately (for example, differently). When an association between an SRS resource set and a P-ID is configured/notified/updated/defined/reported, the number of SRS resources in the SRS resource set may be restricted. For example, the number of SRS resources in the SRS resource set may be restricted so that the number would not be larger than a value (for example, the maximum number of layers of a non-codebook based PUSCH) corresponding to a related (or activated) UE capability value set / P-ID.

UE capability may be introduced about whether the numbers of SRS resources in the respective SRS resource sets are the same or allowed to be different from each other.

The number of SRS ports corresponding to each SRS resource in each SRS resource set may be configured/defined separately (for example, differently). When an association between an SRS port and a P-ID (for example, one of UE capability value sets) is configured/notified/updated/defined/reported, the number of SRS ports may be restricted. For example, the number of SRS ports in each SRS resource set may be restricted so that the number would not be larger than a value corresponding to a related (or activated) UE capability value set / P-ID.

UE capability may be introduced about whether the numbers of SRS ports corresponding to the respective SRS resource sets are the same or allowed to be different from each other.

The first embodiment may be applied to at least one of a configured SRS resource set / P-ID and an activated SRS resource set / P-ID.

### <Second Embodiment>

In a second embodiment, an example of a case of controlling activation of an SRS resource set by using a MAC CE will be described.

When a list of SRS resource sets (for example, a list including one or more SRS resource sets) is configured by RRC, M SRS resource sets at maximum may be activated by using a MAC CE. One MAC CE may activate one or a plurality of SRS resource sets. Alternatively, one MAC CE may be configured to activate one SRS resource set. In this case, to activate two SRS resource sets, it is only needed to use two MAC CEs.

For the MAC CE(s), an existing MAC CE(s) may be reused, or a new MAC CE may be introduced/supported.

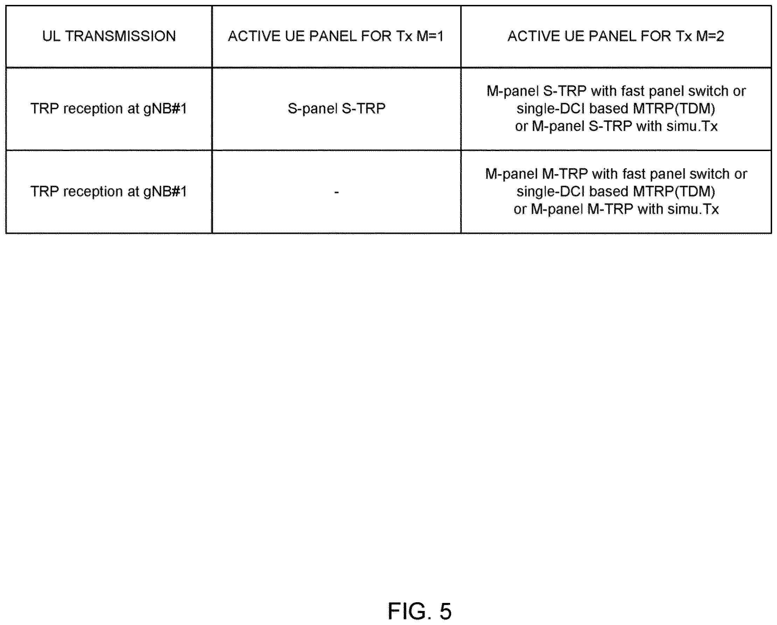

M SRS resource sets at maximum may be applied to PUSCH transmission. For example, M may be 2 (M = 2). For example, M = 1 may mean a panel switch for single-panel transmission (for example, semistatic panel switch). In this case, UL transmission using single-panel/single-TRP may be performed (refer to FIG. 5). A certain base station (for example, a TRP in base station #1) receives a UL signal (for example, a PUSCH/SRS) transmitted from the UE.

M = 2 may mean multi-panel simultaneous transmission (for example, multi-panel simu. transmission) or fast panel switching.

Alternatively, M = 2 may mean fast panel switch or Rel-17 single-DCI based multi-TRP repetition transmission (for example, Rel-17 single-DCI based MTRP repetition) or simultaneous multi-panel UE transmission (for example, simu. MPUE tx.). Alternatively, M = 2 may mean that two panels of the UE are activated while may mean that the number of panels to be actually used for UL transmission at the same time is one or two.

The fast panel switch may mean, for example, that panel #1 is used for UL transmission in a first time (T1), and panel #2 is used for UL transmission in a second time (T2). Different panels may be applied in a TDM scheme.

In the single-DCI based multi-TRP (for example, Rel-17 single-DCI based multi-TRP), two panels may be applied to UL transmission in a TDM scheme as in fast panel switch.

The simultaneous multi-panel UE transmission may mean that panel #1 and panel #2 are used for UL transmission simultaneously in the first time (T1).

In the present disclosure, different transmission modes (for example, TX modes) may be configured. The fast panel switch, the single-DCI based multi-TRP, and the simultaneous multi-panel UE transmission may be dynamically switched.

In the case of M = 2, at least one of a first base station (or a TRP in the first base station) and a second base station (or a TRP in the second base station) may receive a UL signal (for example, a PUSCH/SRS) transmitted from the UE (refer to FIG. 5). For example, the first base station may receive multi-panel/single-TRP UL transmission to which the fast panel switch is applied, single-DCI based multi-TRP (TDM) UL transmission, or multi-panel/single-TRP UL transmission to which the simultaneous UL multi-panel UE transmission is applied.

The second base station may receive multi-panel/multi-TRP UL transmission to which the fast panel switch is applied, single-DCI based multi-TRP (TDM) UL transmission, or multi-panel/single-TRP UL transmission to which the simultaneous UL multi-panel UE transmission is applied.

The same MAC CE or different MAC CEs may have a function of configuring an association (explicit association) between an SRS resource set (for example, activated SRS resource set) and a P-ID (for example, one of activated UE capability value sets).

Alternatively, the association may be implicitly determined by the UE, based on a certain rule. The certain rule may be mapping of active SRS resource sets ordered by a MAC CE and P-IDs (for example, reported indices of activated UE capability value sets).

At least one of option 1-1 to option 1-3 in the first embodiment may be applied to an explicit association by a MAC CE.

For an implicit association, for example, when two SRS resource sets are activated and two indices of UE capability value sets (for example, P-IDs) are reported, the UE may judge that the SRS resource set activated first by a MAC CE corresponds to the lowest (or highest) index of the UE capability value set and the SRS resource set activated second by a MAC CE corresponds to the highest (or lowest) index of the UE capability value set.

When an association between an SRS resource set and a P-ID is configured, a restriction of the number of SRS resources / restriction of the number of SRS ports may be applied.

At least one of the number of activated SRS resource sets and the number of activated P-IDs (for example, reported indices of the UE capability value sets) may be restricted. For example, the number of activated SRS resource sets and the number of activated P-IDs may be restricted to be the same.

Alternatively, the number of activated SRS resource sets may be restricted to be equal to or larger than the number of activated P-IDs (the number of activated SRS resource sets ≥ the number of activated P-IDs). In this case, an SRS resource set to be used actually may be further indicated by DCI (refer to a third embodiment).

An applicable MAC CE in the second embodiment may be a MAC CE for activation/deactivation of a semi-persistent SRS (for example, an SP-SRS). M periodic SRS (for example, P-SRS) resource sets / SRS resources at maximum may be configured in a certain time duration by a MAC CE.

The number of aperiodic SRS (for example, A-SRS) resource sets / SRS resources that can be triggered by DCI may be M at maximum in a certain time duration. The total number of configured P-SRS resource sets / SRS resources, triggered SP-SRS resource sets / SRS resources, and triggered A-SRS resource sets / SRS resources may be M at maximum in a certain time duration.

When the UE has not reported a corresponding P-ID/panel as being active (or being active for UL), or when the UE has not reported a corresponding P-ID/panel in most recent beam reporting (for example, recent beam reporting), the network need not configure/activate/trigger a P/SP/AP-SRS resource set / SRS resource related to the P-ID. In this case, the UE may assume/expect that the network does not configure/activate/trigger the P/SP/AP-SRS resource set / SRS resource related to the P-ID.

### <Third Embodiment>

In a third embodiment, an example of a case of indicating (or triggering) an SRS resource set to be actually used from among activated SRS resource sets, by using DCI will be described. Alternatively, an example of a case of indicating a P-ID to be actually used from among a plurality of P-IDs (for example, activated P-IDs), by using DCI will be described.

By using a certain field (for example, a new field or an existing field) included in DCI, an SRS resource set to be actually used may be indicated from the activated SRS resource sets. Alternatively, when a plurality of P-IDs are in an active state, a P-ID (for example, a UE capability value set) corresponding to a specific UE panel may be indicated by using the certain field included in the DCI.

Based on at least one of the number of activated SRS resource sets corresponding to a panel identifier and whether a transmission mode is configured, association between each SRS resource set and the panel identifier may be controlled. The transmission mode may be at least one of fast panel switching, multi-panel simultaneous transmission (for example, multi-panel simu. tx), and dynamic switching between single-panel and multi-panel. For example, at least one of case 3-1 to case 3-6 below may be applied.

### {Case 3-1}

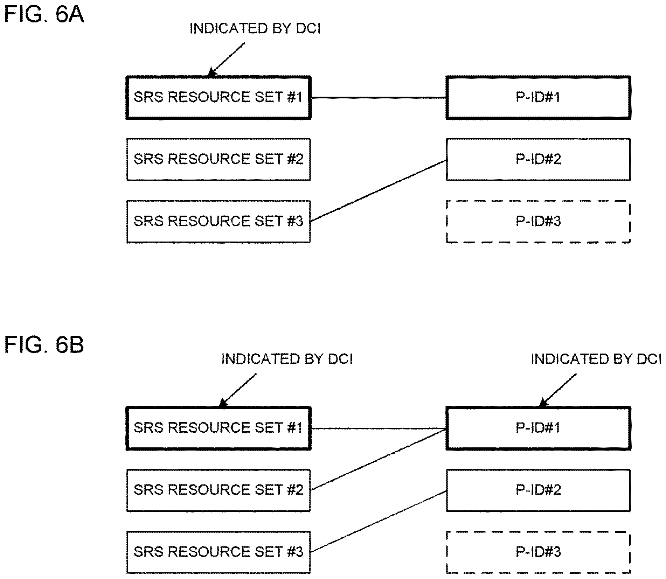

Assume a case where one activated SRS resource set is associated with one P-ID and fast panel switching is configured/enabled. In this case, an activated SRS resource set(s) may be indicated by using a certain field of DCI. This may mean that an activated panel index / P-ID (for example, a UE capability value set) is indicated by the certain field of DCI (refer to FIG. 6A).

FIG. 6A shows a case where, when P-ID #1 and P-ID #2 are activated, and SRS resource set #1 and P-ID #1 are associated with each other while SRS resource set #3 and P-ID #2 are associated with each other, an SRS resource set / P-ID to be actually used is indicated by DCI. FIG. 6A shows a case where SRS resource set #1 and P-ID #1 associated with SRS resource set #1 are indicated as an SRS resource set / P-ID to be actually used, by the DCI. Note that SRS resource sets #1 to #3 may be activated by a MAC CE.

For example, a codepoint "0" of the certain field (for example, in a case of being configured with 1 bit) may mean a first activated SRS resource set and a panel (or a UE capability value set) associated with the SRS resource set. A codepoint "1" may mean a second activated SRS resource set and a panel associated with the SRS resource set.

Alternatively, a codepoint "00" of the certain field (for example, in a case of being configured with 2 bits) may mean the lowest index of reported active UE capability value sets (or P-IDs). A codepoint "01" may mean the second lowest index of the reported active UE capability value sets, a codepoint "10" may mean the third lowest index of the reported active UE capability value sets, and a codepoint "11" may mean the fourth lowest index of the reported active UE capability value sets.

### {Case 3-2}

Assume a case where a plurality of activated SRS resource sets are associated with one P-ID and fast panel switching is configured/enabled. In this case, by using two fields of DCI, an activated panel index / P-ID (for example, a UE capability value set) and an SRS resource set selected for the P-ID (for example, an SRS resource set to be actually used) may be indicated.

For example, a selected P-ID (for example, the index of the UE capability value set) may be indicated by a first field of the DCI, and a specific SRS resource set of activated SRS resource sets associated with the selected P-ID may be indicated by a second field of the DCI (refer to FIG. 6B).

FIG. 6B shows a case where, when P-ID #1 and P-ID #2 are activated, and SRS resource sets #1 and #2 are associated with P-ID #1 while SRS resource set #3 is associated with P-ID #2, an SRS resource set / P-ID to be actually used is indicated by DCI. FIG. 6B shows a case where P-ID #1 is indicated as a P-ID to be actually used by the first field of the DCI, and SRS resource set #1 of SRS resource sets #1 and #2 associated with selected P-ID #1 is indicated as an SRS resource set to be actually used, by the second field of the DCI.

The size of one of the fields of the DCI (for example, the size of the first field) may be determined by the number of active P-IDs. The size of the other one of the fields of the DCI (for example, the size of the second field) may be determined based on the maximum number of SRS resource sets associated with each of the active P-IDs.

Note that, although FIG. 6B shows a case of using two fields of the DCI, this is not restrictive. By using a plurality of respective codepoints (for example, a first codepoint and a second codepoint) included in one field, a P-ID and an SRS resource set may be indicated.

### {Case 3-3}

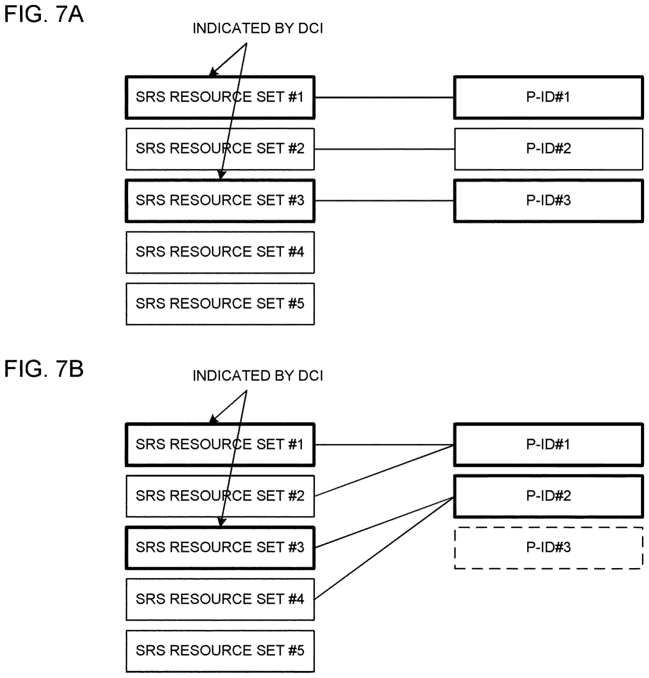

Assume a case where one activated SRS resource set is associated with a P-ID and multi-panel simultaneous transmission (for example, multi-panel simu. tx) is configured/enabled. In this case, two activated SRS resource sets may be indicated by using a certain field of DCI. This may mean that two activated panel indices / P-IDs (for example, UE capability value sets) are indicated by the certain field of the DCI (refer to FIG. 7A).

FIG. 7A shows a case where, when P-ID #1, P-ID #2, and P-ID #3 are activated, and SRS resource set #1 and P-ID #1 are associated with each other, SRS resource set #2 and P-ID #2 are associated with each other, and SRS resource set #3 and P-ID #3 are associated with each other, an SRS resource set / P-ID to be actually used is indicated by DCI. FIG. 7A shows a case where two SRS resource sets (here, SRS resource sets #1 and #3) / two P-IDs (here, P-IDs #1 and #3) associated with the respective SRS resource sets are indicated as SRS resource sets / P-IDs to be actually used, by the DCI.

When only two P-IDs are activated, no certain field of the DCI may be configured. Alternatively, whether a transmission mode is single-panel or multi-panel may be indicated by the certain filed of the DCI.

### {Case 3-4}

Assume a case where a plurality of activated SRS resource sets are associated with one P-ID and multi-panel simultaneous transmission (for example, multi-panel simu. tx) is configured/enabled. In this case, by using two fields of DCI, an activated panel index / P-ID (for example, a UE capability value set) and an SRS resource set selected for the P-ID (for example, an SRS resource set to be actually used) may be indicated.

For example, two selected P-IDs (for example, the indices of the UE capability value sets) may be indicated by a first field of the DCI, and an SRS resource set selected for each of the selected P-IDs may be indicated by a second field of the DCI (refer to FIG. 7B).

FIG. 7B shows a case where, when P-ID #1 and P-ID #2 are activated, and SRS resource sets #1 and #2 are associated with P-ID #1 while SRS resource sets #3 and #4 are associated with P-ID #2, SRS resource sets / P-IDs to be actually used are indicated by DCI. In FIG. 7B, P-IDs #1 and #2 may be indicated as P-IDs to be actually used, by the first field of the DCI. FIG. 7B shows a case where SRS resource set #1 of SRS resource sets #1 and #2 associated with selected P-ID #1 is indicated as an SRS resource set to be actually used, and SRS resource set #3 of SRS resource sets #3 and #4 associated with selected P-ID #2 is indicated as an SRS resource set to be actually used, by the second field of the DCI.

When only two P-IDs are activated, a field for indicating a P-ID (for example, the first field) need not be configured. Alternatively, whether a transmission mode is single-panel or multi-panel may be indicated by the first field.

Note that, although FIG. 7B shows a case of using two fields of the DCI, this is not restrictive. By using a plurality of respective codepoints (for example, a first codepoint and a second codepoint) included in one field, a P-ID and an SRS resource set may be indicated.

### {Case 3-5}

Assume a case where one activated SRS resource set is associated with one P-ID and dynamic switching between single-panel and multi-panel is configured/enabled. In this case, an additional field for indicating whether a transmission mode is single-panel or multi-panel may be provided to DCI.

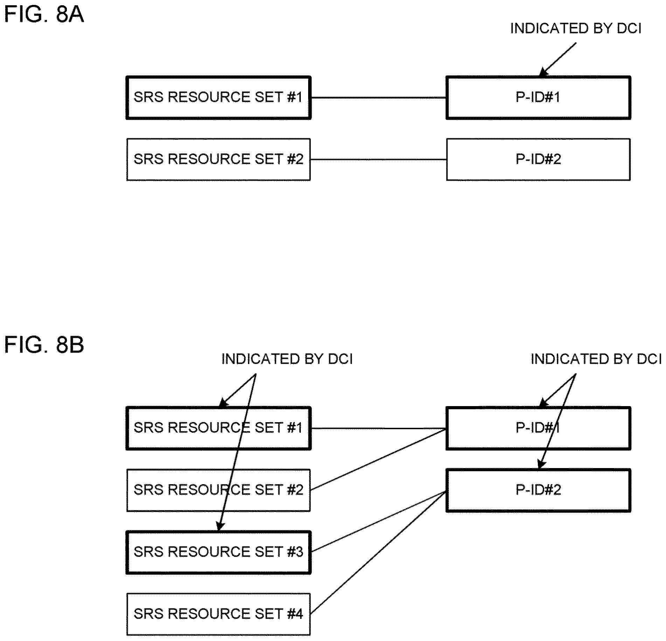

When the transmission mode is single-panel (for example, when single-panel is indicated by the additional field of the DCI), an activated SRS resource set (or an activated panel index / P-ID) may be indicated by using a similar field of DCI to that of case 3-1 (refer to FIG. 8A).

FIG. 8A shows a case where, when P-ID #1 and P-ID #2 are activated, and SRS resource set #1 and P-ID #1 are associated with each other while SRS resource set #3 and P-ID #2 are associated with each other, an SRS resource set / P-ID to be actually used is indicated by DCI. FIG. 8A shows a case where a transmission mode being single-panel is indicated and SRS resource set #1 and P-ID #1 associated with SRS resource set #1 are indicated as an SRS resource set / P-ID to be actually used, by the DCI.

When the transmission mode is multi-panel (for example, when multi-panel is indicated by the additional field of the DCI), two activated SRS resource sets (or two activated panel indices / P-IDs) may be indicated by using a similar field of DCI to that of case 3-3.

The field for indicating a transmission mode (for example, the additional field) and the field for indicating one activated SRS resource set in case 3-1 / the field for indicating two activated SRS resource sets in case 3-3 may be configured as the same field (or shared). In this case, when two enabled SRS resource sets are indicated by the DCI, this may mean multi-panel. When one enabled SRS resource set is indicated by the DCI, this may mean single-panel.

### {Case 3-6}

Assume a case where a plurality of activated SRS resource sets are associated with one P-ID and dynamic switching between single-panel and multi-panel is configured/enabled. In this case, an additional field for indicating whether a transmission mode is single-panel or multi-panel may be provided to DCI.

When the transmission mode is single-panel (for example, when single-panel is indicated by the additional field of the DCI), an activated panel index / P-ID (for example, a UE capability value set) and an SRS resource set selected for the P-ID (for example, an SRS resource set to be actually used) may be indicated by using two similar fields of DCI to those of case 3-2.

When the transmission mode is multi-panel (for example, when multi-panel is indicated by the additional field of the DCI), two activated SRS resource sets (or two activated panel indices / P-IDs) may be indicated by using a similar field of DCI to that of case 3-4 (refer to FIG. 8B).

FIG. 8B shows a case where, when P-ID #1 and P-ID #2 are activated, and SRS resource sets #1 and #2 are associated with P-ID #1 while SRS resource sets #3 and #4 are associated with P-ID #2, SRS resource sets / P-IDs to be actually used are indicated by DCI. In FIG. 8B, a case of a transmission mode being multi-panel may be indicated by the DCI, and P-IDs #1 and #2 may be indicated as P-IDs to be actually used, by the first field of the DCI. FIG. 8B further shows a case where SRS resource set #1 of SRS resource sets #1 and #2 associated with selected P-ID #1 is indicated as an SRS resource set to be actually used, and SRS resource set #3 of SRS resource sets #3 and #4 associated with selected P-ID #2 is indicated as an SRS resource set to be actually used, by the second field of the DCI.

The field for indicating a transmission mode (for example, the additional field) and the field for indicating one P-ID in case 3-2 / the field for indicating two P-IDs in case 3-4 may be configured as the same field (or shared). In this case, when two enabled P-IDs are indicated by the DCI, this may mean multi-panel. When one enabled P-ID is indicated by the DCI, this may mean single-panel.

For case 3-1 to case 3-6 and whether to support each DCI field, UE capabilities may be defined/supported.

### <Variation 1>

Each association between an SRS resource / SRS resource set and a UE panel may be configured/supported at different granularity.

By RRC, configuration of a plurality of lists of SRS resource sets may be supported, and each list may include one or a plurality of SRS resource sets.

When one or a plurality of active P-IDs are configured/updated by RRC / MAC CE / reported by the UE, a corresponding list may also be activated/associated by the MAC CE or may also be updated/reported/determined by the UE. An association between a list and a currently activated P-ID may be configured/updated by RRC / DL MAC CE or may be reported by the UE (for example, a UL MAC CE).

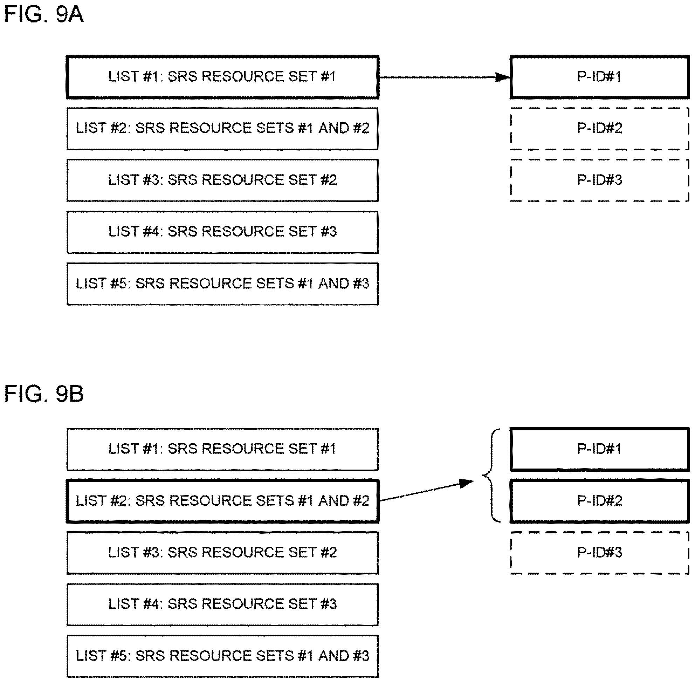

For example, when panel #1 of the UE (for example, P-ID #1) is activated, list #1 may be activated by a MAC CE or associated with panel #1, and list #1 may include one SRS resource set (refer to FIG. 9A).

FIG. 9A shows that P-ID #1 is activated and list #1 is associated with P-ID #1 (or a case where list #1 is activated). FIG. 9A shows a case where list #1 includes SRS resource set #1.

For example, when panel #1 and panel #2 of the UE are activated, list #2 may be activated by a MAC CE / the UE or associated with panel #1 / panel #2, and list #2 may include two SRS resource sets (refer to FIG. 9B).

FIG. 9B shows that P-ID #1 and P-ID #2 are activated and list #2 is associated with P-ID #1 and P-ID #2 (or a case where list #2 is activated). FIG. 9B shows a case where list #2 includes SRS resource set #1 and SRS resource set #2.

An association between each SRS resource set in a list and each active UE panel may be explicitly/implicitly configured or may be reported/determined by the UE.

### <Variation 2>

Each association between an SRS resource / SRS resource set and a UE panel may be configured/supported at different granularity.

A configuration of a plurality of SRS resources may be supported by RRC, and an association between one or a plurality of SRS resources and a P-ID may be configured/updated by RRC / DL MAC CE or may be reported by the UE (for example, a UL MAC CE).

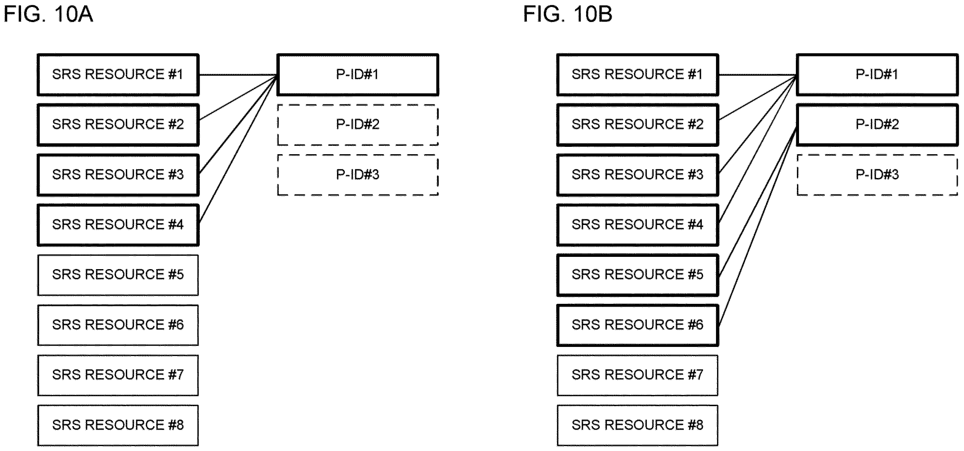

FIG. 10A shows a case where P-ID #1 is activated and a plurality of SRS resources (here, SRS resources #1 to #4) are associated with P-ID #1.

FIG. 10B shows a case where P-ID #1 and P-ID #2 are activated, and a plurality of SRS resources (here, SRS resources #1 to #4 (or a first SRS resource group) are associated with P-ID #1 while another plurality of SRS resources (here, SRS resources #4 and #5 (or a second SRS resource group)) are associated with P-ID #2.

### <DCI Format / SRS Type>

A DCI field used for indicating an SRS resource set / P-ID may be configured to be present only in one or some DCI formats or may be configured to be present in all the DCI formats. An example of the one or some DCI formats may be DCI format 1_1/1_2/0_1/0_2 or may be a DCI format including an SRS request field.

An SRS for which a corresponding panel is indicated by DCI may be at least one SRS of an aperiodic SRS (for example, an A-SRS), a semi-persistent SRS (for example, an SP-SRS), and a periodic SRS (for example, an S-SRS) or may be a specific SRS (for example, an A-SRS).

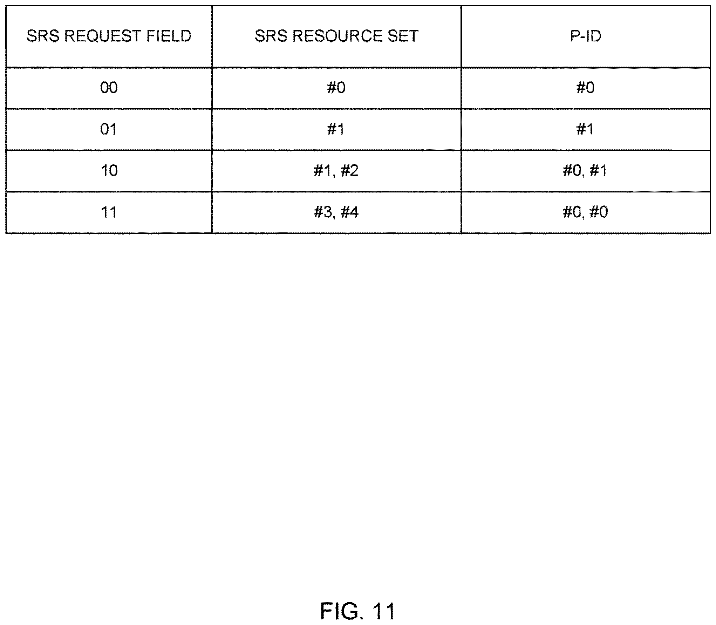

When a panel is indicated only for a specific SRS (for example, an A-SRS), an existing DCI field (for example, an SRS request field) may be used to indicate a panel ID (refer to FIG. 11). FIG.11 shows a case where an SRS resource set(s) / P-ID(s) are associated with each code point of the SRS request field for configuration/definition. An association between each codepoint and the SRS resource set(s) / P-ID(s) may be defined in a specification in advance or may be configured by RRC.

The first embodiment to the third embodiment may be applied to operation of a certain time domain (for example, an A-SRS/SP-SRS/P-SRS) or may be applied to all the A-SRS/SP-SRS/P-SRS.

The first embodiment to the third embodiment may be applied to one or some usage methods / UL transmissions with one or some usages or may be applied to all the usage methods. The one or some usage methods may be, for example, codebook based UL transmission / non-codebook based UL transmission.

To an SRS of any of the first embodiment to the third embodiment, a UL TCI / a joint TCI (or unified TCI) of Rel-17 or later versions may be applied.

The first embodiment to the third embodiment may be applied only to a case where the UE has reported a specific UE capability.

The specific UE capability may be at least one of the following:
- whether to support (operations of) a plurality of UE panels,
- whether to support RRC based multi-panel indication, RRC + MAC CE based multi-panel indication, or RRC + MAC CE + DCI based multi-panel indication,
- whether to support fast panel switch of actual transmissions (for example, real transmissions) from a plurality of active panels,
- whether to support dynamic switch between different schemes, for example, whether to support simultaneous multi-panel UE transmission / fast panel switch / dynamic switch of single-DCI based MTRP, and
- whether to support RRC based, RRC + MAC CE based, or RRC + MAC CE + DCI based scheme or whether to support dynamic switch between different schemes.

Note that the above-described specific UE capability may be a capability for CB based PUSCH, a capability for NCB based PUSCH, or may be a capability not differentiating these.

At least one of the above-described embodiments may be applied when the UE is configured with specific information / specific UE capability information related to the above-described embodiment by higher layer signaling (when the UE is not configured with any of these, Rel-15/16 operation is applied, for example).

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

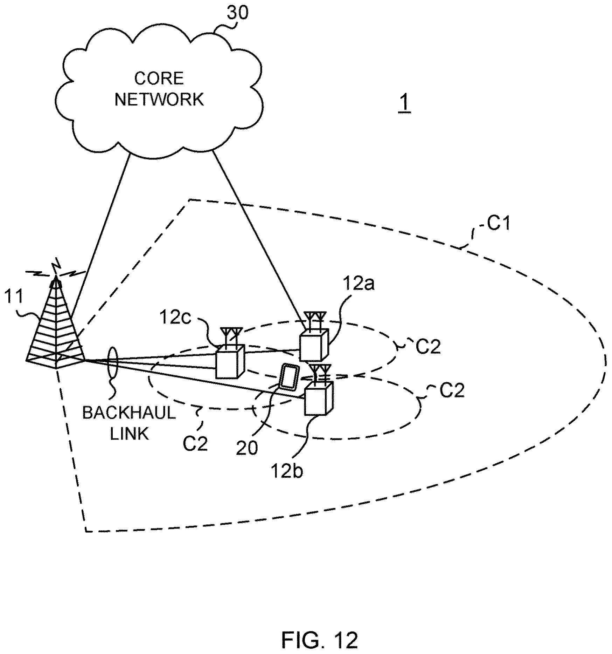

FIG. 12 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

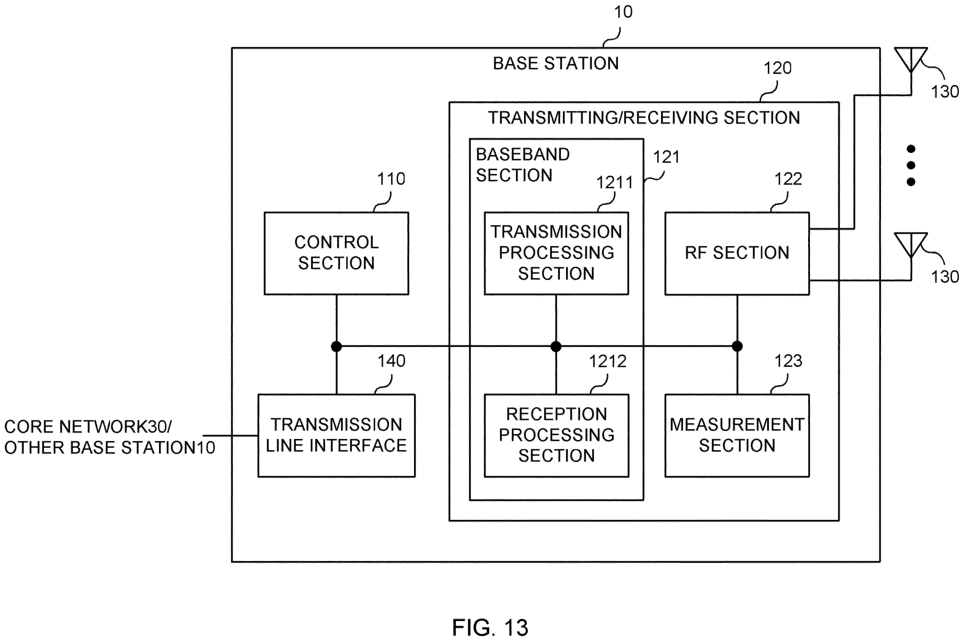

FIG. 13 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit information related to an SRS resource set including one or more (Sounding Reference Signal (SRS)) resources. The transmitting/receiving section 120 may receive an SRS, based on a correspondence between the SRS resource set and an active panel identifier or a panel identifier reported by terminal capability signaling. The control section 110 may judge and do the correspondence between the SRS resource set and the active panel identifier or the panel identifier reported by terminal capability signaling.

The transmitting/receiving section 120 may transmit downlink control information including at least one of information indicating a specific SRS resource set among one or more activated (Sounding Reference Signal (SRS)) resource sets and information related to an active panel identifier or a panel identifier reported by terminal capability signaling. The control section 110 may control an association between the specific SRS resource set and the panel identifier, based on the number of activated SRS resource sets corresponding to the panel identifier.

### (User Terminal)

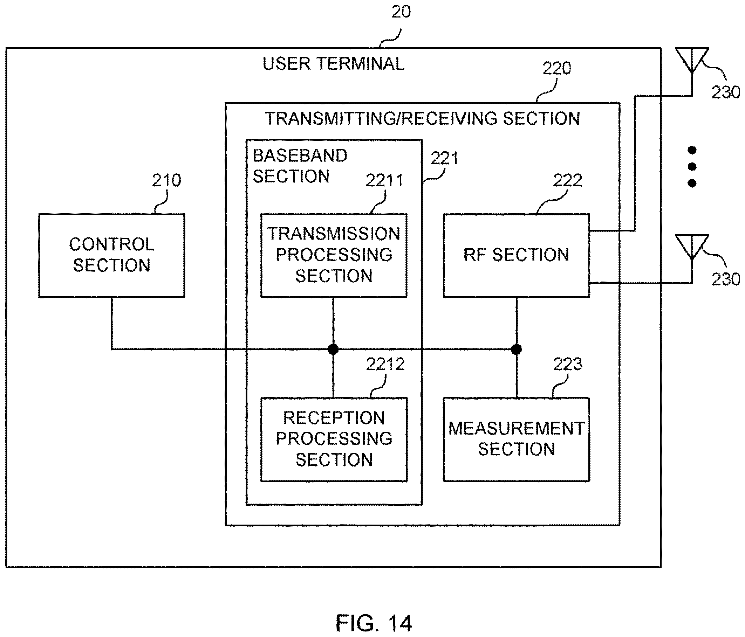

FIG. 14 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive information related to an SRS resource set including one or more (Sounding Reference Signal (SRS)) resources. The transmitting/receiving section 220 may transmit an SRS, based on a correspondence between the SRS resource set and an active panel identifier or a panel identifier reported by terminal capability signaling. The transmitting/receiving section 220 may receive information related to an SRS resource set to be activated, by one or more MAC control elements (MAC CEs).

The control section 210 may judge the correspondence between the SRS resource set and the active panel identifier or the panel identifier reported by terminal capability signaling. The control section 210 may judge whether it is single-panel transmission or multi-panel transmission, based on the number of SRS resource sets to be activated.

An association between the SRS resource set to be activated and the panel identifier reported by the terminal capability signaling may be indicated by the one or more MAC CE or performed according to a rule defined in advance.

The transmitting/receiving section 220 may receive downlink control information including at least one of information indicating a specific SRS resource set among one or more activated (Sounding Reference Signal (SRS)) resource sets and information related to an active panel identifier or a panel identifier reported by terminal capability signaling.

The control section 210 may judge an association between the specific SRS resource set and the panel identifier, based on the number of activated SRS resource sets corresponding to the panel identifier. The control section 210 may judge an association between the specific SRS resource set and the panel identifier, based on at least one of a configuration of panel switch, a configuration of multi-panel transmission, and a configuration of switch between single-panel and multi-panel.

When the number of activated SRS resource sets corresponding to the panel identifier is more than one, information indicating the specific SRS resource set may be indicated by a first field of the downlink control information, and information related to the active panel identifier or the panel identifier reported by the terminal capability signaling is indicated by a second field of the downlink control information.

The downlink control information including at least one of the information indicating the specific SRS resource set and the information related to the panel identifier may be at least one of downlink control information including an SRS request field and downlink control information corresponding to a specific SRS type.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

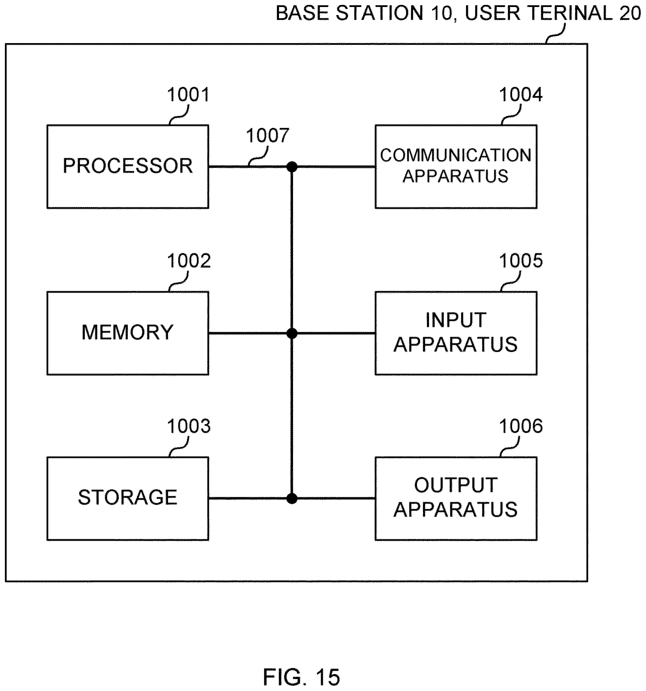

For example, a base station, a user terminal, and so on according to one embodiment of the present disclosure may function as a computer that executes the processes of the radio communication method of the present disclosure. FIG. 15 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings.

For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

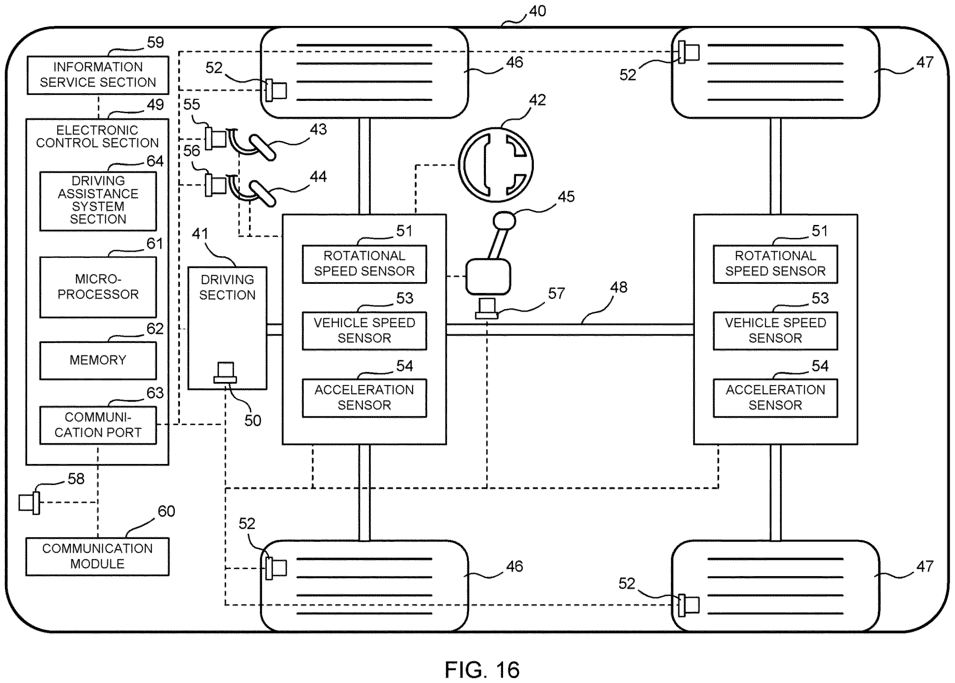

FIG. 16 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to -58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to -58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to -58 described above input to the electronic control section 49, information obtained based on the signals, and information based on an input from the outside (a user) obtained via the information service section 59, to the external apparatus via radio communication. The electronic control section 49, the various sensors 50 to -58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to -58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and nextgeneration systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives information related to an SRS resource set including one or more (Sounding Reference Signal (SRS)) resources;
a control section that judges a correspondence between the SRS resource set and an active panel identifier or a panel identifier reported by terminal capability signaling; and
a transmitting section that transmits an SRS, based on the correspondence.

2. The terminal according to claim 1, wherein
the receiving section receives information related to an SRS resource set to be activated, by one or more MAC control elements (MAC CEs) .

3. The terminal according to claim 2, wherein
an association between the SRS resource set to be activated and the panel identifier reported by the terminal capability signaling is indicated by the one or more MAC CE or performed according to a rule defined in advance.

4. The terminal according to claim 2 or 3, wherein
the control section judges whether it is single-panel transmission or multi-panel transmission, based on the number of SRS resource sets to be activated.

5. A radio communication method for a terminal, the radio communication method comprising:
receiving information related to an SRS resource set including one or more (Sounding Reference Signal (SRS)) resources;
judging a correspondence between the SRS resource set and an active panel identifier or a panel identifier reported by terminal capability signaling; and
transmitting an SRS, based on the correspondence.

6. A base station comprising:
a transmitting section that transmits information related to an SRS resource set including one or more (Sounding Reference Signal (SRS)) resources;
a control section that judges a correspondence between the SRS resource set and an active panel identifier or a panel identifier reported by terminal capability signaling; and
a receiving section that receives an SRS, based on the correspondence.
